# EUROPÄISCHE PATENTANMELDUNG

(11) **EP 3 822 833 A1**
(43) Veröffentlichungstag der Anmeldung: **19.05.2021**
(21) Anmeldenummer: 19209656.8
(22) Anmeldetag: 18.11.2019
(51) Int. Cl.: G06F 21/44

(54) **VERBRAUCHSEINRICHTUNG, VERBRAUCHSKOMPONENTE UND VERFAHREN ZUM AUTHENTIFIZIEREN EINER VERBRAUCHSKOMPONENTE BEI EINER VERBRAUCHSEINRICHTUNG**

(71) Anmelder: Infineon Technologies AG, 85579 Neubiberg (DE)
(72) Erfinder: GEBERT, Joern, 12349 Berlin (DE); GAMMEL, Berndt, 85570 Markt-Schwaben (DE); MEYER, Bernd, 81739 München (DE)
(74) Vertreter: Viering, Jentschura & Partner mbB Patent- und Rechtsanwälte

(57) **Zusammenfassung**

Gemäß einem Ausführungsbeispiel wird eine Verbrauchseinrichtung beschrieben aufweisend einen Empfänger, der eingerichtet ist, von einer Verbrauchskomponente eine Authentifizierungsinformation zu empfangen, eine Authentifizierungsschaltung, die eingerichtet ist, zu überprüfen, ob die empfangene Authentifizierungsinformation eine vorgegebene Marke spezifiziert und die Verbrauchskomponente für die Verwendung mit der Verbrauchseinrichtung zu authentifizieren, wenn die empfangene Authentifizierungsinformation die vorgegebene Marke spezifiziert und eine Ausgabevorrichtung, die eingerichtet ist, die Authentifizierungsinformation zumindest teilweise auszugeben.

## Beschreibung

Ausführungsbeispiele betreffen allgemein Verbrauchseinrichtungen, Verbrauchskomponenten und Verfahren zum Authentifizieren einer Verbrauchskomponente bei einer Verbrauchseinrichtung.

Nachahmungen sind ein wichtiges Thema in Endverbrauchermärkten mit Verbrauchsgütern. Es besteht ein hohes Risiko, dass Nachahmer-Unternehmen Klone von Verbrauchskomponenten erstellen, die sich genauso verhalten wie die Originalkomponenten. Typischerweise werden Authentifizierungschips zum Schutz von Verbrauchskomponenten eingesetzt. In der Regel besteht ihre Aufgabe darin, nachzuweisen, dass eine Verbrauchskomponenten-Vorrichtung (z.B. Druckerkartusche) als Original für das Host-Gerät (z.B. den Drucker) identifiziert werden kann. In diesem Beispiel würde der Drucker erst nachdem die Druckerkartusche authentifiziert wurde die Kartusche annehmen und zum Drucken verwenden oder im gegenteiligen Fall beispielsweise den Nutzer warnen, dass es sich um eine nicht-originale Kartusche handelt.

Trotzdem kommt es vor, dass nicht-originale Druckerkartuschen (oder andere nicht-originale Verbrauchsgüter) angeboten werden. Dies geschieht dadurch, dass auch die Authentifizierungschips kopiert oder nachgeahmt werden, um einen Hersteller von nicht-originalen Druckerkartuschen damit zu beliefern, so dass dieser seine nachgeahmten Druckerkartuschen anbieten kann.

Es sind deshalb effektive Maßnahmen wünschenswert, um die Verwendung von Nachahmungen von Verbrauchsgütern (auch bezeichnet als Verbrauchskomponenten) mit (originalen) verbrauchenden Geräten zu verhindern.

Gemäß einem Ausführungsbeispiel wird eine Verbrauchseinrichtung bereitgestellt aufweisend einen Empfänger, der eingerichtet ist, von einer Verbrauchskomponente eine Authentifizierungsinformation zu empfangen, eine Authentifizierungsschaltung, die eingerichtet ist, zu überprüfen, ob die empfangene Authentifizierungsinformation eine vorgegebene Marke spezifiziert und die Verbrauchskomponente für die Verwendung mit der Verbrauchseinrichtung zu authentifizieren, wenn die empfangene Authentifizierungsinformation die vorgegebene Marke spezifiziert, und eine Ausgabevorrichtung, die eingerichtet ist, die Authentifizierungsinformation zumindest teilweise auszugeben.

Die Figuren geben nicht die tatsächlichen Größenverhältnisse wieder sondern sollen dazu dienen, die Prinzipien der verschiedenen Ausführungsbeispiele zu illustrieren. Im Folgenden werden verschiedene Ausführungsbeispiele mit Bezug auf die folgenden Figuren beschrieben.
- Figur 1: zeigt eine Verbrauchsgutanordnung, bestehend aus einem Verbrauchsgut und einem verbrauchenden Gerät.
- Figur 2: zeigt ein Ablaufdiagramm zum Authentifizieren einer Verbrauchsgut-Authentifizierungsschaltung bei einer Host-Authentifizierungsschaltung.
- Figur 3: zeigt eine Übersicht über Maßnahmen gegen das Kopieren von Verbrauchsgütern.
- Figur 4: zeigt eine Verbrauchseinrichtung gemäß einer Ausführungsform.
- Figur 5: zeigt ein Ablaufdiagramm, das ein Verfahren zum Authentifizieren einer Verbrauchskomponente bei einer Verbrauchseinrichtung veranschaulicht.

Die folgende detaillierte Beschreibung bezieht sich auf die beiliegenden Figuren, die Details und Ausführungsbeispiele zeigen. Diese Ausführungsbeispiele sind so detailliert beschrieben, dass der Fachmann die Erfindung ausführen kann. Andere Ausführungsformen sind auch möglich und die Ausführungsbeispiele können in struktureller, logischer und elektrischer Hinsicht geändert werden, ohne vom Gegenstand der Erfindung abzuweichen. Die verschiedenen Ausführungsbeispiele schließen sich nicht notwendig gegenseitig aus sondern es können verschiedene Ausführungsformen miteinander kombiniert werden, so dass neue Ausführungsformen entstehen. Im Rahmen dieser Beschreibung werden die Begriffe "verbunden", "angeschlossen" sowie "gekoppelt" verwendet zum Beschreiben sowohl einer direkten als auch einer indirekten Verbindung, eines direkten oder indirekten Anschlusses sowie einer direkten oder indirekten Kopplung.

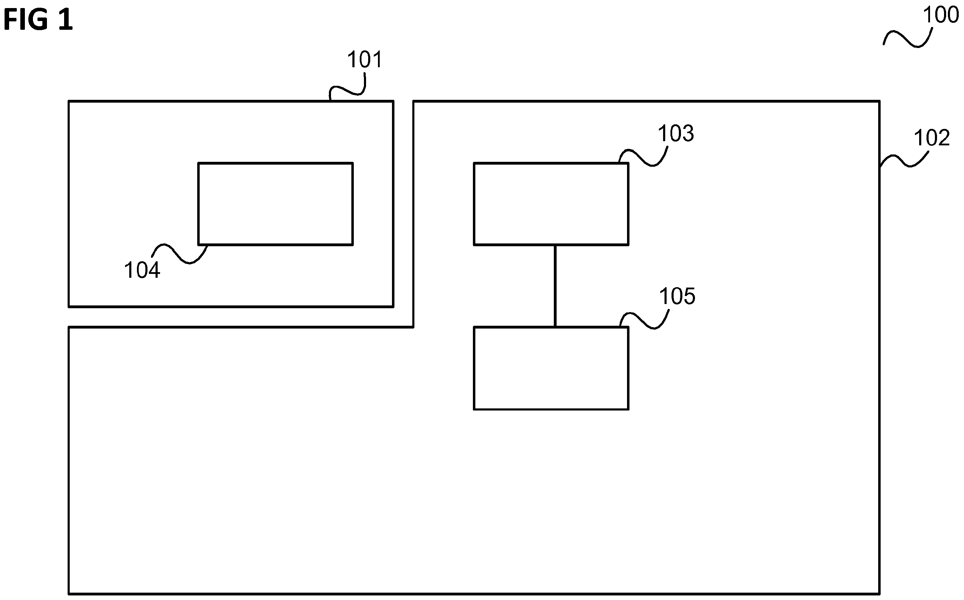

Figur 1 zeigt eine Verbrauchsgutanordnung 100, bestehend aus einem Verbrauchsgut 101 (auch bezeichnet als Verbrauchskomponenten-Vorrichtung) und einem verbrauchenden (oder nutzendem) Gerät 102 (auch bezeichnet als Verbrauchereinrichtung).

Das Verbrauchsgut 101 ist eine Vorrichtung, die eine Ressource bereitstellt (und beispielsweise speichert oder enthält), die bei Betrieb des verbrauchenden Geräts 102 verbraucht wird.

Beispielsweise enthält das Verbrauchsgut ein (körperliches) Material, das verbraucht wird, wie bei einer Druckerpatrone, einer Verdampferpatrone für Insektizide oder Insektenabwehrmittel, einer E-Zigaretten-Nachfüllpatrone oder auch einer medizinischen Substanz (z.B. Arznei) für ein medizinisches Gerät in einem entsprechenden Behälter. Das Verbrauchsgut kann in einer anderen Ausführungsform aber auch eine nichtkörperliche Ressource enthalten, die verbraucht wird, wie beispielsweise ein Guthaben, z.B. für ein Prepaidhandy.

Beispiele für Paare von Verbrauchsgut 101 und verbrauchendem Gerät 102 sind:
- Druckerpatrone - Drucker
- Nachfüllpatrone - Inhaliergerät
- Nachfüllpatrone - Insektenabwehrmittelmittelbehälter
- Batterie - elektrische Vorrichtung, die von der Batterie versorgt wird
- Guthabenkarte - Prepaidhandy
- Kaffeekapsel - Kaffeemaschine
- Wasserfilterkartusche - Wasserfilter.

Das Verbrauchsgut 101 wird beispielsweise mit dem verbrauchenden Gerät 102 körperlich verbunden, z.B. eingesteckt oder eingebaut. Das Verbrauchsgut 101 ist typischerweise auswechselbar (insbesondere lösbar) mit dem verbrauchenden Gerät 102 verbunden.

Der Hersteller eines verbrauchenden Geräts 102 wünscht typischerweise, dass nur Verbrauchsgüter 101, die von ihm selbst (oder einem Lizenznehmer) hergestellt werden, mit dem verbrauchenden Gerät 102 verwendet werden können.

Deshalb kann vorgesehen sein, dass das verbrauchende Gerät 102 eine Host-Authentifizierungsschaltung 103 aufweist, gegenüber der sich eine Verbrauchsgut-Authentifizierungsschaltung 104 authentifizieren muss. Das verbrauchende Gerät 102 weist beispielsweise eine Steuereinrichtung 105 auf, die den Betrieb des verbrauchenden Geräts 102 (auch als Host bezeichnet) mit dem Verbrauchsgut 101 (auch als Consumable bezeichnet) nur zulässt, wenn das Verbrauchsgut 101 sich mittels einer Verbrauchsgut-Authentifizierungsschaltung 104 erfolgreich bei der Host-Authentifizierungsschaltung 103 des verbrauchenden Geräts 102 authentifiziert hat.

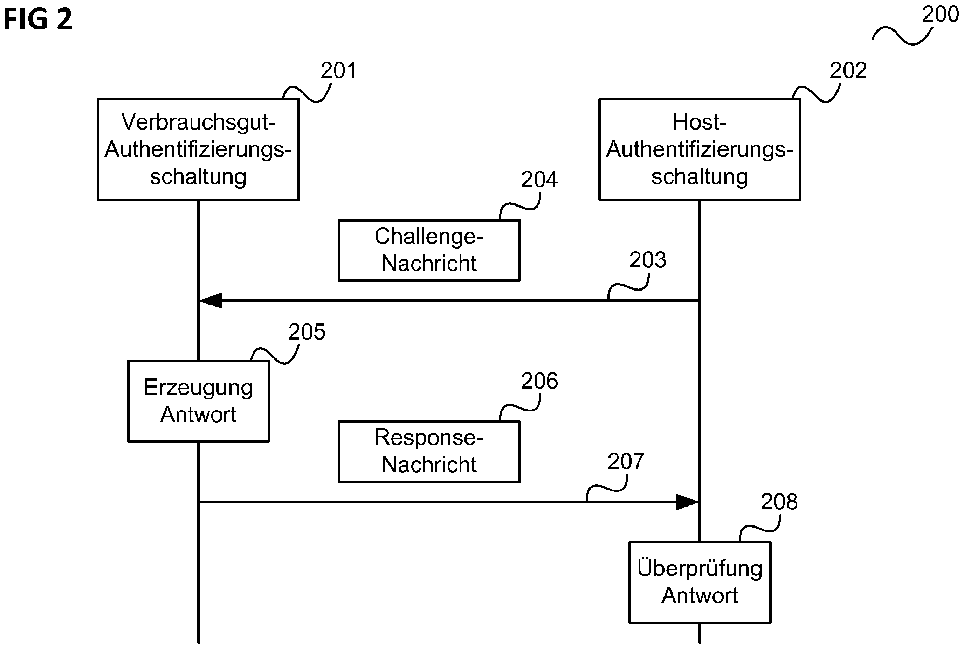

Figur 2 zeigt ein Ablaufdiagramm 200 zum Authentifizieren einer Verbrauchsgut-Authentifizierungsschaltung 201 bei einer Host-Authentifizierungsschaltung 202.

Die Verbrauchsgut-Authentifizierungsschaltung 201 und die Host-Authentifizierungsschaltung 202 entsprechen beispielsweise der Verbrauchsgut-Authentifizierungsschaltung 104 bzw. der Host-Authentifizierungsschaltung 103 von Figur 1.

Zur Authentifizierung der Verbrauchsgut-Authentifizierungsschaltung 201 bei der Host-Authentifizierungsschaltung 202 sendet die Host-Authentifizierungsschaltung 202 in 203 eine Challenge-Nachricht 204 an die Verbrauchsgut-Authentifizierungsschaltung 201. In 205 erzeugt die Verbrauchsgut-Authentifizierungsschaltung 201 eine Antwort, die sie in Form einer Antwortnachricht 206 in 207 an die Host-Authentifizierungsschaltung 202 übermittelt. In 208 verifiziert Host-Authentifizierungsschaltung 202, dass die Antwort korrekt ist, beispielsweise der Challenge entspricht, und authentifiziert die Verbrauchsgut-Authentifizierungsschaltung 201, wenn das der Fall ist.

Beispielsweise fügt die Host-Authentifizierungsschaltung 202 in die Challenge-Nachricht 204 eine zufällige Zahl ein, auf deren Basis die Verbrauchsgut-Authentifizierungsschaltung 201 die Antwort in korrekter Weise erzeugen muss, um von der Host-Authentifizierungsschaltung 202 authentifiziert zu werden. Beispielsweise basiert die Authentifizierung auf Elliptic Curve Cryptography (ECC). Die Antwort kann beispielsweise auch von einem zwischen der Verbrauchsgut-Authentifizierungsschaltung 201 und der Host-Authentifizierungsschaltung 202 ausgehandelten kryptographischen Schlüssel abhängen.

Mit einer Authentifizierungsschaltung 104, z.B. in Form eines Authentifizierungschips, auf einem Verbrauchsgut 101 kann somit im Idealfall sichergestellt werden, dass ein verbrauchendes Gerät 102 nur Original-Verbrauchskomponenten-Vorrichtungen verwendet.

Allerdings besteht das Risiko, dass ein Hersteller eines nicht-originalen Verbrauchsguts das nicht-originale Verbrauchsgut mit einem nicht-originalen Authentifizierungschip versieht, sodass das nicht-originale (d.h. nachgeahmte oder kopierte) Verbrauchsgut wiederum mit einem originalen verbrauchenden Gerät verwendet werden kann.

Herangehensweisen, um die Herstellung und das Anbieten von Kopien (d.h. Klonen) von Verbrauchsgütern (und insbesondere darauf vorgesehene Authentifizierungschips) zu vermeiden, wie etwa Patentanmeldungen oder sogenannte Camouflage-Schaltungen (z.B. zum Erschweren von Reverse Engineering eines Authentifizierungschips) haben nur bedingten Erfolg.

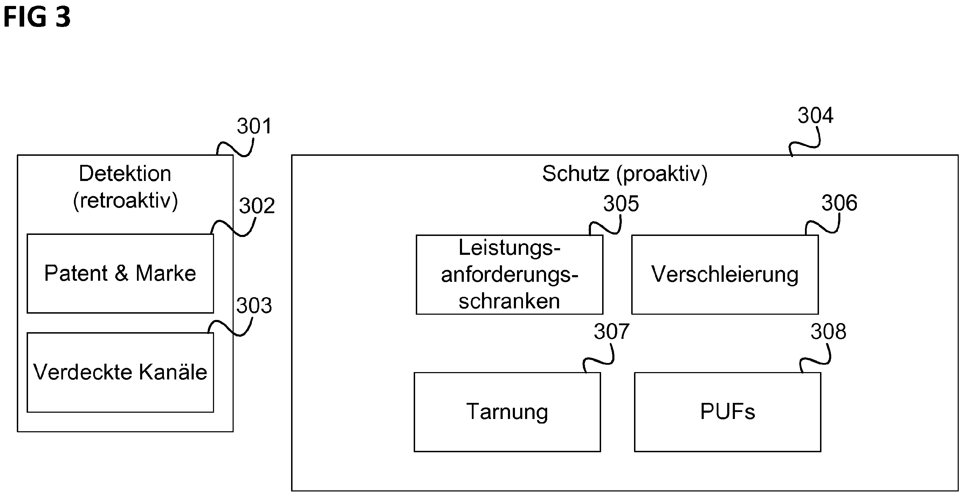

Figur 3 zeigt eine Übersicht über Maßnahmen gegen das Kopieren von Verbrauchsgütern.

Eine erste Kategorie 301 enthält Maßnahmen, die auf der Detektion von Klonen basieren und als retroaktive Maßnahmen angesehen werden können. Sie enthält Maßnahmen basierend auf Patentschutz oder Markenschutz 302 und Maßnahmen basierend auf verdeckten Kanälen 303, d.h. geheime Informationskänale, z.B. einen Seitenkanal.
Ein Chip könnte z.B. seinen Stromverbrauch so modulieren, dass damit Information übermittelt werden.

Die Maßnahmen der ersten Kategorie 301 sollen im Wesentlichen die Detektionen von Klonen erleichtern, um eine rechtliche Verfolgung der Kloner zu ermöglichen. Sie verhindern nicht unbedingt die Herstellung eines funktionierenden Klons.

Eine zweite Kategorie 304 enthält Maßnahmen, die auf dem proaktiven Schutz gegen Klonen basierend, z.B. Maßnahmen basierend auf Leistungsanforderungsschranken 305, Verschleierung 306, Tarnung (Camouflage) 307 und PUFs (Physical Uncloneable Functions) 308.

Die Maßnahmen in der zweiten Kategorie 304 werden angewendet, um einen Angreifer daran zu hindern, einen funktionierenden und profitablen Klon zu produzieren. Da es kein grundlegendes Mittel gibt, um Reverse Engineering und anschließendes Klonen durch einen Angreifer mit unbegrenzten Ressourcen zu verhindern, liegt der Fokus darauf, Gegenmaßnahmen so hinzuzufügen, dass sein Geschäftsmodell nicht mehr funktioniert. Dies kann beispielsweise dadurch erreicht werden, dass der Prozess des Reverse Engineering des Originalprodukts so zeitaufwändig wird, dass sich diese Zeitspanne dem Lebenszyklus des Produkts (d.h. des Verbrauchsguts, das kopiert werden soll) annähert. Das heißt, dass wenn der Angreifer einen funktionierenden Klon hergestellt hat, bereits der größte Teil des Produktvolumens durch ein Nachfolgeprodukt ersetzt ist. Ein weiteres Ziel wäre es, den Prozess des Reverse Engineering aufwändig zu machen, was die notwendige Ausrüstung oder die Arbeitskraft betrifft, um einen Klon unrentabel zu machen. Eine dritte Möglichkeit besteht darin, einen potenziellen Vorteil in der Produktionstechnologie zu nutzen, sodass die Herstellung eines Klons in einer weniger fortschrittlichen Technologie zu kostspielig wird. Die letzte Option ist jedoch in der Regel nur möglich, wenn das Produkt auf dem neuesten Stand der Technik ist.

Der Erfolg aller Maßnahmen in der zweiten Kategorie hängt stark von den monetären und technologischen Ressourcen des Angreifers ab - wenn er in der Reverse-Engineering-Phase erhebliche Ressourcen einsetzen kann und Zugang zu fortschrittlichen Produktionstechnologien und -einrichtungen hat, wird der Schutz vor dem Klonen zu einer anspruchsvollen Aufgabe. Gegenmaßnahmen zum Schutz gegen Klonen führen auch zu zusätzlichen Kosten für den Originalhersteller, und die Kosten steigen typischerweise mit der Stärke der Gegenmaßnahme. Dies impliziert auch, dass der Satz von Gegenmaßnahmen sorgfältig ausgewählt werden muss, je nach dem spezifischen Produkt, den angenommenen Fähigkeiten des Angreifers und der Produktzykluszeit. Da es kein universelles Verfahren zum Schutz gegen Klonen gibt, besteht nur die Möglichkeit, einen Baukasten mit einer Vielzahl von effizienten Gegenmaßnahmen einzurichten, aus der das geeignete Maßnahmenpaket ausgewählt wird.

Die Auswahl des Satzes von Gegenmaßnahmen für ein bestimmtes Produkt wird typischerweise durch die folgenden Faktoren bestimmt:
- Annahmen über die Angriffsmöglichkeiten des Kloners.
- Flächenbeschränkungen: zusätzliche Siliziumfläche von Gegenmaßnahmen (z.B. für Tarn- und Tarnschaltungen).
- Leistungseinschränkungen: erhöhte Leckstromverluste oder dynamische Leistungsaufnahme.
- Leistungseinschränkungen: Gegenmaßnahmen können die maximale Taktfrequenz begrenzen.
- Komplexität: Zusätzliche Schritte im Implementierungsablauf und in der Verifikation.
- Zuverlässigkeit: Mögliche Auswirkungen auf die Erträge.
- IP-Kosten: Lizenzierung von geschützten Sicherheitsverfahren (z.B. kommerzielle Camouflage-Technologie).
- Technologische Freiheitsgrade: Herstellung durch einen Dritten im Vergleich zu eigener Produktionsstätte.

Der Erwerb von Patenten, Gebrauchsmustern, Geschmacksmustern oder Marken für Teile oder Eigenschaften eines Produkts ist das klassische Mittel, um ein Produkt vor Nachahmung durch einen Wettbewerber zu schützen. Diese rechtlichen Waffen können auch ein starkes Mittel zum Schutz vor dem Klonen sein. Kann eine Verletzung nachgewiesen werden, hat der Rechtsinhaber in der Regel die Möglichkeit, die Herstellung, den Vertrieb und die Einfuhr der gefälschten Produkte zu verbieten und auch Schadenersatz zu verlangen. Es gibt jedoch einige Schwierigkeiten mit diesem rückwirkenden Ansatz basierend auf Patenten:
- Das Produkt muss ein patentierbares Merkmal enthalten, das nicht immer angegeben ist.
- Die Patentverletzung muss erkennbar sein, was zu einem teuren Reverse Engineering führen kann, insbesondere bei der Entwicklung von elektronischen Schaltungen.
- Es müssen Klagen geführt werden, die mit hohen Kosten und Zeitaufwand verbunden sein können, auch so, dass der inzwischen entstandene Schaden nicht mehr kompensiert werden kann.
- Das Patentrecht und die Möglichkeiten der Strafverfolgung werden in den einzelnen Ländern unterschiedlich behandelt (die Durchsetzung könnte sogar unpraktisch sein).
- Das Patent muss in allen Ländern erteilt werden, in denen das Produkt einen großen Marktanteil hat. Es kann einen ziemlich langen Zeitraum (typischerweise 2-5 Jahre) dauern, bis das Patent erteilt wird.

Trotz der Schwierigkeiten bei der strafrechtlichen Verfolgung von IP-Verletzungen können die ersten beiden Punkte deutlich erleichtert werden. Dazu werden im Folgenden drei Herangehensweisen beschrieben, die kurz als Hardwarepatent-Trojaner, Softwarepatent-Trojaner und Protokollpatent bzw. Protokollmarke bezeichnet werden.

Für einen Hardware-Patent-Trojaner wird ein kleiner spezialisierter Schaltkreis implementiert, der eine durch ein Patent geschützte Funktion realisiert. Diese Funktion ist möglicherweise nicht einmal für den Anwendungszweck des Produkts erforderlich. Die Funktion sollte von außerhalb über eine Standard-Kommunikationsschnittstelle zugänglich sein. Alternativ kann er mit der Eigenschaft entworfen werden, dass ein sehr einzigartiges Schaltungsmuster erzeugt wird, das normalerweise nie in einem "Standard"-Design erscheint. Der Ersteller eines Klons würde auch diesen Teilschaltkreis kopieren, wenn er eine vollständige Reverse-Engineering-basierte Kopie des Produkts erstellt. Auf diese Weise wird die Identifizierung sehr einfach, was der erste Schritt zu einer schnellen und effizienten Strafverfolgung mit hoher Erfolgsquote ist. Wenn die implementierte patentierte Trojaner-Schaltung für die Funktionalität nicht unbedingt notwendig ist oder wenn sie sich nicht gründlich mit den anderen Schaltungen verschränkt, besteht die Gefahr, dass der Kloner die Schaltung in einem zweiten Entwurfsschritt (sobald der Kloner für dieses Risiko sensibilisiert ist) isolieren und entfernen kann.

Für einen Softwarepatent-Trojaner wird das Prinzip des Hardwarepatent-Trojaners auf Software ausgedehnt: Ein patentierter Algorithmus oder andere gesetzlich geschützte Daten können in der Software oder im Datenspeicher des Produkts verborgen sein. Wie beim Hardwarepatent-Trojaner kann der Kloner in der Lage sein, den Softwarepatent-Trojaner zu entfernen, wenn er für die Funktionsfähigkeit des Klons nicht notwendig ist. Da die Analyse von Software im Allgemeinen einfacher ist als die Analyse von Hardware, kann die Effektivität der Softwarelösung deshalb als schwächer bewertet werden. Mit kryptographischen Verfahren, z.B. elektronischen Signaturschemata und Nachrichtenauthentifizierungscodes, ist es jedoch möglich, die Software oder geschützte Daten an das jeweilige Gerät zu binden. Wenn beispielsweise geschützte Daten Teil eines elektronisch signierten Zertifikats einer Public-Key-Infrastruktur sind, kann jede Änderung der geschützten Teile, die der Kloner vornimmt, leicht erkannt werden.

Die obigen Beispiele deuten darauf hin, dass die patentierte Hard- oder Software untrennbar mit der Funktionalität des Produkts verbunden sein sollte. Dies kann am einfachsten erreicht werden, wenn das Kommunikationsprotokoll mit dem Gerät selbst eine patentierte Funktion enthält oder auf sie verweist. Wenn also eine geklonte Verbrauchskomponenten-Vorrichtung in der Lage ist, funktional korrekt mit einem Host zu kommunizieren, beweist dies automatisch die Verletzung des Patents. Dies ist z.B. die gängige Situation bei den Mobilfunkstandards (z.B. 3G, LTE, CDMA) oder im öffentlichen Verkehr und Transit mit dem offenen Standard CIPURSE™.

Als Beispiel wird angenommen, dass ein Drucker mit einer Druckerkartusche (genauer ihrem Authentifizierungschip) über ein Protokoll kommuniziert, das auf der Elliptische-Kurven-Kryptographie (ECC) basiert. Einige Kurvenparameter, ein Authentifizierungsmechanismus oder ein Signaturerzeugungsverfahren seien durch ein Patent geschützt. Jeder geklonte Chip, der in der Lage ist, eine authentifizierte Kommunikation einzurichten (d.h. funktionsfähig ist), würde automatisch das Patent verletzen.

Ein weiteres Beispiel ist, dass der Authentifizierungschip einen Algorithmus implementiert, der eine Challenge-Nachricht, die vom Drucker kommt, mittels eines patentierten Algorithmus transformiert. Der Drucker sendet eine zufällige Challenge und die Druckerkartusche gibt den transformierten Wert zurück. Der Drucker verifiziert die Antwort. Die Transformation braucht keinen geheimen Schlüssel zu enthalten. Jeder arbeitende Klon würde per Definition das Patent verletzen.

Es bestehen jedoch dennoch Schwierigkeiten mit dem Schutz vor Klonen basierend auf Patenten, nämlich, wie oben erläutert, die Notwendigkeit von aufwändigen Klagen, eingeschränkter Möglichkeiten der Durchsetzung und die Notwendigkeit und der Aufwand einer Erteilung in mehreren Ländern.

Im Gegensatz dazu sind Marken oft bereits in einer Vielzahl von Ländern registriert und der Missbrauch kann typischerweise einfacher und schneller nachgewiesen werden als eine mögliche Patentverletzung.

Deshalb wird gemäß verschiedenen Ausführungsformen ein Schutz gegen Klonen basierend auf einer geschützten Marke eingesetzt, indem die Marke als Authentifizierungsmittel verwendet wird.

Dabei wird gemäß verschiedenen Ausführungsformen die geschützte Marke als Teil von ein oder mehreren Nachrichten eines (normalen) Kommunikationsprotokolls zur Authentifizierung zwischen Verbrauchskomponente und verbrauchendem Gerät verwendet. Wenn also eine geklonte Verbrauchskomponente funktionsfähig ist, beweist dies automatisch den Missbrauch einer Marke.

Gemäß einer Ausführungsform wird beispielsweise ein markenrechtlich geschützter Name oder ein Logo für die Authentifizierung und Freischaltung einer Druckerpatrone verwendet.

Beispielsweise übermittelt eine Druckerpatrone (als Beispiel für das Verbrauchsgut) an den Drucker (als Beispiel für das verbrauchende Gerät) folgende Zeichenkette (z.B. im ASCII-code) zur Authentifizierung: "Die Tintenpatrone ist eine Druckerherstellername-Tintenpatrone".

Die Druckerpatronen-Authentifizierungsschaltung 201 übermittelt diese Zeichenkette zum Beispiel in Reaktion auf den Empfang einer Challenge-Nachricht 204, die die Druckerpatronen-Authentifizierungsschaltung 201 dazu auffordert, sich zu identifizieren (und weiter keinen Schlüssel oder ähnliches enthalten braucht).

Die druckerseitige Authentifizierungsschaltung 202 überprüft die enthaltene Zeichenkette durch Vergleich mit einer gespeicherten Liste von Zeichenketten, die zur Authentifizierung zulässig sind und verwendet die Druckerpatronen-Authentifizierungsschaltung 201, falls die Überprüfung positiv ist, d.h. die Zeichenkette zulässig ist. In anderen Worten wird die Zeichenkette der Druckerpatronen-Authentifizierungsschaltung 201 gegenüber der druckerseitigen Authentifizierungsschaltung 202 verwendet, um die Druckerpatronen-Authentifizierungsschaltung 201 für die druckerseitige Authentifizierungsschaltung 202 freizuschalten. Die Zeichenkette mit dem Markennamen kann auch ein zusätzliches Identitätsmerkmal darstellen, d.h. zusätzlich zu einem anderen Authentifizierungsmechanismus, z.B. basierend auf einem kryptographischen Challenge-Response-Verfahren wie mit Bezug auf Figur 2 beschrieben, zur Authentifizierung verwendet werden. Der Markenname oder das Markenlogo kann Bestandteil eines Zertifikats eines öffentlichen Schlüssels der Druckerpatrone sein, über die elektronische Signatur des Zertifikats mit geschützt sein und gemeinsam mit dem Zertifikat (bzw. als Teil des Zertifikats) übertragen werden. Der Drucker prüft dann auf Echtheit der elektronischen Signatur.

Außerdem zeigt die druckerseitige Authentifizierungsschaltung 202 die Zeichenkette auf einer Anzeige des Druckers an (z.B. auf einem Display wie einem kleinen Bildschirm, z.B. einem Touch-Bildschirm zum Steuern des Druckers, der auf oder an dem Drucker vorgesehen ist). Damit wird auch dem Benutzer des Druckers ermöglicht, die Druckerpatronen-Authentifizierungsschaltung 201 zu authentifizieren.

Der Hersteller einer nachgeahmten Tintenpatrone, die diese Authentisierungs-Zeichenkette zur Authentifizierung der nachgeahmten Tintenpatrone benutzt, würde eine Markenverletzung begehen, gegen die der Markeninhaber vorgehen könnte. Diese Markenverletzung kann der Nachahmer nicht vermeiden, da ohne die Verwendung der geschützten Authentisierungs-Zeichenkette die Benutzung der Druckerpatrone blockiert und nicht möglich ist.

Derselbe Mechanismus funktioniert auch mit jeder anderen eingetragenen Marke und kann mit einer solchen verwendet werden. Weitere Anwendungsfelder sind alle Anwendungen mit austauschbaren Kartuschen, die authentifiziert werden sollen, beispielsweise auf dem Gebiet der E-Zigaretten (oder auch die anderen im Zusammenhang mit Figur 1 genannten Beispiele).

Es kann auch eine gegenseitige Authentifizierung eingesetzt werden, beispielsweise eine Authentifizierung, sodass eine Original-Kartusche nur mit einem zugehörigen originalen verbrauchendem Gerät funktioniert. Dazu könnte beispielsweise das verbrauchende Gerät eine Zeichenkette (oder allgemein die Repräsentation einer geschützten Marke) an die Verbrauchskomponente schicken, um sich bei der Verbrauchskomponente zu authentifizieren, die eingerichtet werden kann, nur bei erfolgreich authentifiziertem verbrauchenden Gerät mit dem verbrauchenden Gerät zusammenzuarbeiten. Dies kann beispielsweise dazu dienen eine Überdosierung durch ein nicht-originales verbrauchendes Gerät (z.B. ein Inhaliergerät) zu vermeiden.

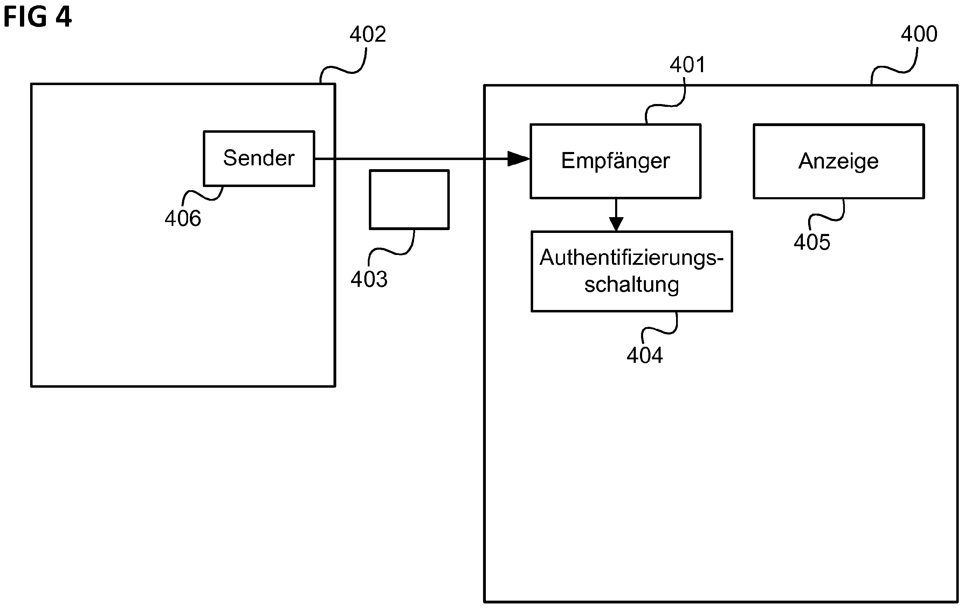

Zusammenfassend wird gemäß verschiedenen Ausführungsformen eine Verbrauchseinrichtung (d.h. ein verbrauchendes Gerät) bereitgestellt, wie sie in Figur 4 dargestellt ist.

Figur 4 zeigt eine Verbrauchseinrichtung 400 gemäß einer Ausführungsform.

Die Verbrauchseinrichtung 400 weist einen Empfänger 401 auf, der eingerichtet ist, von einer Verbrauchskomponente 402 eine Authentifizierungsinformation 403 zu empfangen.

Die Verbrauchseinrichtung 400 weist ferner eine Authentifizierungsschaltung 404 auf, die eingerichtet ist, zu überprüfen, ob die empfangene Authentifizierungsinformation 403 eine vorgegebene Marke spezifiziert (die geschützt ist, z.B. eingetragen ist). Die Authentifizierungsschaltung 404 ist ferner dazu eingerichtet, die Verbrauchskomponente (z.B. nur dann) für die Verwendung mit der Verbrauchseinrichtung 400 zu authentifizieren, wenn die empfangene Authentifizierungsinformation 403 die vorgegebene Marke spezifiziert.

Die Verbrauchseinrichtung 400 weist außerdem eine Ausgabevorrichtung 405 auf, die eingerichtet ist, die Authentifizierungsinformation zumindest teilweise auszugeben.

In anderen Worten wird gemäß verschiedenen Ausführungsformen eine Verbrauchskomponente (oder anders ausgedrückt eine Verschleißkomponente), die beispielsweise eine Ressource wie z.B. eine Flüssigkeit aufweist, die verbraucht wird, durch Nachahmung geschützt, indem für ihre Authentifizierung eine geschützte Marke verwendet wird. Die Verbrauchskomponente gibt beispielsweise an, dass sie eine Verbrauchskomponente von dieser Marke ist (oder zu dieser Marke gehört) so benutzt der Nachahmer die Marke und begeht somit eine Markenverletzung (anders ausgedrückt verletzt der Nachahmer die Marke). Der Nachahmer kann somit an der Nachahmung gehindert werden.

Die Authentifizierungsinformation kann ein Teil (oder ein Element) von umfangreicheren Authentifizierungsdaten sein, die noch weitere Teile enthält als den Teil, der die Marke spezifiziert und die von der Verbrauchskomponente an die Verbrauchsvorrichtung übertragen werden. Die Ausgabevorrichtung ist beispielsweise eingerichtet, zumindest den Teil (oder das Element) der Authentifizierungsdaten auszugeben, der die vorgegebene Marke spezifiziert.

Die Authentifizierungsschaltung kann auch eingerichtet sein, zu überprüfen, ob die empfangene Authentifizierungsinformation mindestens eine von mehreren vorgegebenen Marken spezifiziert und kann dazu eingerichtet sein, die Verbrauchskomponente (z.B. nur dann) für die Verwendung mit der Verbrauchseinrichtung zu authentifizieren, wenn die empfangene Authentifizierungsinformation mindestens eine von mehreren vorgegebenen Marken spezifiziert.

Gegenüber einem Schutz vor Klonen basierend auf einem Patent hat ein Schutzmechanismus vor Klonen basierend auf einer geschützten Marke, die als Teil des Authentifizierungsprotokolls verwendet wird, wie es Figur 4 beschreibt, die Vorteile, dass der Prozess zur Erlangung einer eingetragenen Marke typischerweise viel schneller ist auch der Prozess zur Durchsetzung einer Marke (z.B. eines Importverbots, oder Produktionsstopps) ist in der Regel viel schneller ist.

Anstelle eines patentierten Algorithmus wird eine Zeichenkette (oder ein Bild oder ein Musikclip oder ein anderes digital repräsentierbares Element, das durch eine geschützte Marke ausgegeben werden kann) für Authentifikationsdaten oder ein Identitätsmerkmal verwendet. Dies erfolgt derart, dass die Authentifizierung (d.h. die Verifikation der Authentifikationsinformation) nur dann positiv ist, wenn das geschützte Element in den Authentifizierungsdaten enthalten ist. Um die Markenverletzung rechtlich zu erzwingen, ist es gemäß verschiedenen Ausführungsformen vorgesehen, dass das Element dem Kunden (d.h. dem Benutzer, der Kunde des Herstellers der Verbrauchseinrichtung bzw. der Verbrauchskomponente ist) präsentiert wird, sodass die Markenverletzung unmittelbar vorliegt. Dies kann dadurch erreicht werden, dass das Element als Bild auf einer Anzeige angezeigt wird, in textueller Form angezeigt wird, als Audio ausgegeben wird etc.

Gemäß einer weiteren Ausführungsform wird eine Verbrauchskomponente 402 bereitgestellt, die einen Sender 406 aufweist, der eingerichtet ist, eine Authentifizierungsinformation an eine Verbrauchseinrichtung zu senden, wobei die Authentifizierungsinformation eine vorgegebene Marke spezifiziert.

Die Verbrauchskomponente 402 kann die Authentifizierungsinformation beispielsweise als Reaktion auf eine Challenge-Nachricht schicken, die sie von der Verbrauchseinrichtung empfängt (wie beispielsweise mit Bezug auf Figur 2 beschrieben).

Gemäß einer weiteren Ausführungsform wird eine Verbrauchskomponentenanordnung bereitgestellt, die eine Verbrauchskomponente 402 und eine Verbrauchsvorrichtung 400 aufweist.

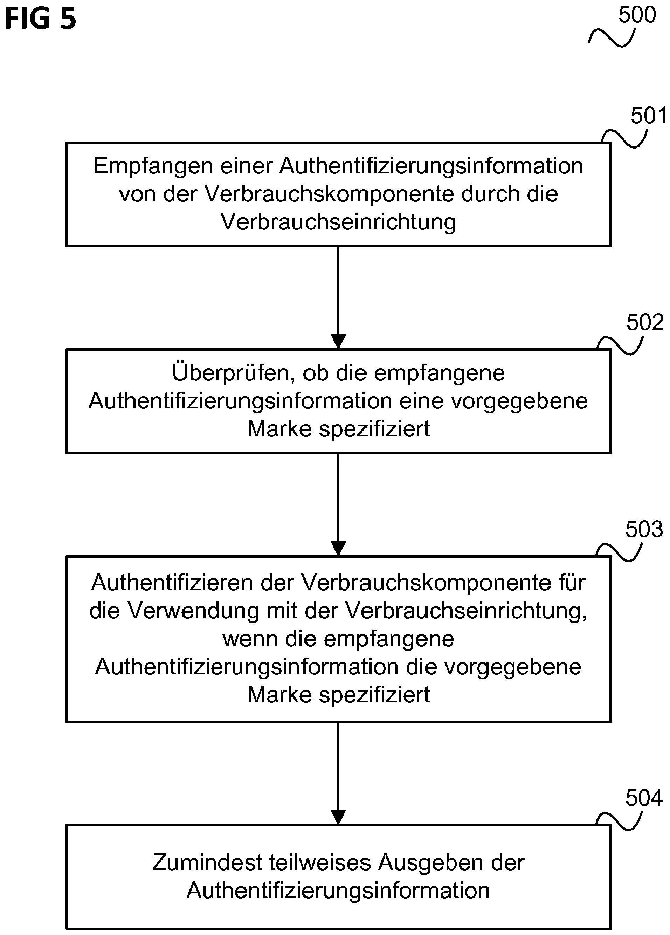

Die Verbrauchskomponentenanordnung führt beispielsweise ein Verfahren aus, wie es in Figur 5 dargestellt ist.

Figur 5 zeigt ein Ablaufdiagramm 500, das ein Verfahren zum Authentifizieren einer Verbrauchskomponente bei einer Verbrauchseinrichtung veranschaulicht.

In 501 wird eine Authentifizierungsinformation von der Verbrauchskomponente durch die Verbrauchseinrichtung empfangen.

In 502 wird überprüft, ob die empfangene Authentifizierungsinformation eine vorgegebene Marke spezifiziert (also z.B. angibt oder repräsentiert, z.B. in Form einer Zeichenkette oder allgemein Daten (z.B. Bilddaten oder Audiodaten) enthält).

In 503 wird die Verbrauchskomponente für die Verwendung mit der Verbrauchseinrichtung authentifiziert, wenn die empfangene Authentifizierungsinformation die vorgegebene Marke spezifiziert.

In 504 wird die Authentifizierungsinformation zumindest teilweise ausgegeben.

Gemäß einer Ausführungsform wird ein Computer-lesbares Speichermedium bereitstellt, das Instruktionen enthält, die wenn sie von einem Prozessor ausgeführt werden, bewirken, dass der Prozessor das Verfahren gemäß Figur 5 (oder Weiterbildungen davon wie hierin beschrieben) ausführt. Das Computer-lesbare Speichermedium kann Teil der Verbrauchskomponente sein.

Die Komponenten der Verbrauchskomponente 402 und der Verbrauchsvorrichtung 400 können zumindest teilweise durch Schaltungen realisiert sein. In einer Ausführungsform ist eine "Schaltung" als jegliche Einheit zu verstehen, die eine Logik implementiert, und die sowohl Hardware, Software, Firmware oder eine Kombination daraus sein kann. Somit kann eine "Schaltung" in einer Ausführungsform ein hart-verdrahteter Logik-Schaltkreis oder ein programmierbarer Logik-Schaltkreis sein, wie beispielsweise ein programmierbarer Prozessor, z.B. ein Mikroprozessor. Unter einer "Schaltung" kann auch ein Prozessor, der Software ausführt, zu verstehen sein, z.B. jegliche Art von Computer-Programm, etwa ein Computer-Programm in Programmiercode für eine virtuelle Maschine (Virtual Machine), wie z.B. ein Java-Computer-Programm. Unter einem "Schaltkreis" kann in einer Ausführungsform jegliche Art der Implementierung der im Weiteren beschriebenen Funktionen zu verstehen sein

Im Folgenden werden verschiedene Ausführungsbeispiele angegeben.

Ausführungsbeispiel 1 ist eine Verbrauchseinrichtung, wie sie mit Bezug auf Figur 4 beschrieben ist.

Ausführungsbeispiel 2 ist eine Verbrauchseinrichtung gemäß Ausführungsbeispiel 1, wobei die Ausgabevorrichtung eine Anzeige aufweist, die eingerichtet ist, die Authentifizierungsinformation anzuzeigen.

Ausführungsbeispiel 3 ist eine Verbrauchseinrichtung gemäß Ausführungsbeispiel 1 oder 2, wobei die Authentifizierungsinformation eine Zeichenkette aufweist und die Authentifizierungsschaltung eingerichtet ist, zu überprüfen, ob die Zeichenkette einen vorgegebenen Markennamen spezifiziert, und die Verbrauchskomponente für die Verwendung mit der Verbrauchseinrichtung zu authentifizieren, wenn die Zeichenkette den vorgegebenen Markennamen spezifiziert.

Ausführungsbeispiel 4 ist eine Verbrauchseinrichtung gemäß Ausführungsbeispiel 1 oder 2, wobei die Authentifizierungsinformation ein Logo aufweist und die Authentifizierungsschaltung eingerichtet ist, zu überprüfen, ob das Logo ein vorgegebenes Markenlogo spezifiziert und die Verbrauchskomponente für die Verwendung mit der Verbrauchseinrichtung zu authentifizieren, wenn das Logo das vorgegebene Markenlogo spezifiziert.

Ausführungsbeispiel 5 ist eine Verbrauchseinrichtung gemäß einem der Ausführungsbeispiele 1 bis 4, wobei die Verbrauchseinrichtung ein Drucker und die Verbrauchskomponente eine Druckerpatrone ist oder die Verbrauchseinrichtung ein Inhaliergerät und die Verbrauchskomponente eine Nachfüllpatrone ist.

Ausführungsbeispiel 6 ist eine Verbrauchseinrichtung gemäß einem der Ausführungsbeispiele 1 bis 5, wobei die Marke einen Hersteller der Verbrauchseinrichtung identifiziert.

Ausführungsbeispiel 7 ist eine Verbrauchseinrichtung gemäß einem der Ausführungsbeispiele 1 bis 6, wobei die Marke einen Hersteller von für die Verbrauchseinrichtung originalen Verbrauchskomponenten spezifiziert.

Ausführungsbeispiel 8 ist eine Verbrauchseinrichtung gemäß einem der Ausführungsbeispiele 1 bis 7, wobei der Empfänger eingerichtet ist, eine weitere Authentifizierungsinformation zu empfangen und die Authentifizierungsschaltung eingerichtet ist, zu überprüfen, ob die empfangene weitere Authentifizierungsinformation einer vorgegebenen weiteren Authentifizierungsinformation entspricht, und die Verbrauchseinrichtung nur dann zu authentifizieren, wenn die empfangene Authentifizierungsinformation die vorgegebene Marke spezifiziert und wenn die empfangene weitere Authentifizierungsinformation der vorgegebenen weiteren Authentifizierungsinformation entspricht.

Ausführungsbeispiel 9 ist eine Verbrauchseinrichtung gemäß einem der Ausführungsbeispiele 1 bis 8, wobei die Ausgabevorrichtung eingerichtet ist, zumindest einen solchen Teil der Authentifizierungsinformation auszugeben, der die vorgegebene Marke spezifiziert.

Ausführungsbeispiel 10 ist eine Verbrauchseinrichtung gemäß einem der Ausführungsbeispiele 1 bis 9, wobei die Ausgabevorrichtung eingerichtet ist, zumindest einen solchen Teil der Authentifizierungsinformation auszugeben, der die vorgegebene Marke für einen Benutzer erkenntlich macht.

Ausführungsbeispiel 11 ist eine Verbrauchskomponente aufweisend einen Sender, der eingerichtet ist, eine Authentifizierungsinformation an eine Verbrauchseinrichtung zu senden, wobei die Authentifizierungsinformation eine vorgegebene Marke spezifiziert.

Ausführungsbeispiel 12 ist ein Verfahren, wie es mit Bezug auf Figur 5 beschrieben ist.

Ausführungsbeispiel 13 ist ein Verfahren gemäß Ausführungsbeispiel 12, aufweisend Anzeigen der Authentifizierungsinformation auf der Verbrauchseinrichtung.

Ausführungsbeispiel 14 ist ein Verfahren gemäß Ausführungsbeispiel 12 oder 13, wobei die Authentifizierungsinformation eine Zeichenkette aufweist und das Verfahren das Überprüfen, ob die Zeichenkette einen vorgegebenen Markennamen spezifiziert, und das Authentifizieren der Verbrauchskomponente für die Verwendung mit der Verbrauchseinrichtung wenn die Zeichenkette den vorgegebenen Markennamen spezifiziert, aufweist.

Ausführungsbeispiel 15 ist ein Verfahren gemäß Ausführungsbeispiel 12 oder 13, wobei die Authentifizierungsinformation ein Logo aufweist und das Verfahren das Überprüfen, ob das Logo ein vorgegebenes Markenlogo spezifiziert, und das Authentifizieren der Verbrauchskomponente für die Verwendung mit der Verbrauchseinrichtung aufweist, wenn das Logo das vorgegebene Markenlogo spezifiziert, aufweist.

Ausführungsbeispiel 16 ist ein Verfahren gemäß einem der Ausführungsbeispiele 12 bis 15, wobei die Verbrauchseinrichtung ein Drucker und die Verbrauchskomponente eine Druckerpatrone ist oder die Verbrauchseinrichtung ein Inhaliergerät und die Verbrauchskomponente eine Nachfüllpatrone ist.

Ausführungsbeispiel 17 ist ein Verfahren gemäß einem der Ausführungsbeispiele 12 bis 16, wobei die Marke einen Hersteller der Verbrauchseinrichtung identifiziert.

Ausführungsbeispiel 18 ist ein Verfahren gemäß einem der Ausführungsbeispiele 12 bis 17, wobei die Marke einen Hersteller von für die Verbrauchseinrichtung originalen Verbrauchskomponenten spezifiziert.

Ausführungsbeispiel 19 ist ein Verfahren gemäß einem der Ausführungsbeispiele 12 bis 18, aufweisend Empfangen einer weiteren Authentifizierungsinformation, Überprüfen, ob die empfangene weitere Authentifizierungsinformation einer vorgegebenen weiteren Authentifizierungsinformation entspricht, und Authentifizieren der Verbrauchseinrichtung nur dann, wenn die empfangene Authentifizierungsinformation die vorgegebene Marke spezifiziert und wenn die empfangene weitere Authentifizierungsinformation der vorgegebenen weiteren Authentifizierungsinformation entspricht.

Ausführungsbeispiel 20 ist ein Verfahren gemäß einem der Ausführungsbeispiele 12 bis 19, aufweisend Ausgeben zumindest eines solchen Teils der Authentifizierungsinformation der die vorgegebene Marke spezifiziert.

Ausführungsbeispiel 21 ist ein Verfahren gemäß einem der Ausführungsbeispiele 12 bis 20, aufweisend Ausgeben zumindest eines solchen Teils der Authentifizierungsinformation, der die vorgegebene Marke für einen Benutzer erkenntlich macht.

Obwohl die Erfindung vor allem unter Bezugnahme auf bestimmte Ausführungsformen gezeigt und beschrieben wurde, sollte es von denjenigen, die mit dem Fachgebiet vertraut sind, verstanden werden, dass zahlreiche Änderungen bezüglich Ausgestaltung und Details daran vorgenommen werden können, ohne vom Wesen und Bereich der Erfindung, wie er durch die nachfolgenden Ansprüche definiert wird, abzuweichen. Der Bereich der Erfindung wird daher durch die angefügten Ansprüche bestimmt, und es ist beabsichtigt, dass sämtliche Änderungen, welche unter den Wortsinn oder den Äquivalenzbereich der Ansprüche fallen, umfasst werden.

### Bezugszeichenliste

- 100: Verbrauchsgutanordnung
- 101: Verbrauchsgut
- 102: verbrauchendes Gerät
- 103: Host-Authentifizierungsschaltung
- 104: Verbrauchsgut-Authentifizierungsschaltung
- 105: Steuereinrichtung

- 200: Ablaufdiagramm
- 201: Verbrauchsgut-Authentifizierungsschaltung
- 202: Host-Authentifizierungsschaltung
- 203: Ablaufschritt
- 204: Challenge-Nachricht
- 205: Ablaufschritt
- 206: Response-Nachricht
- 207, 208: Ablaufschritte

- 301: Klon-Schutzmaßnahmen-Kategorie
- 302, 303: Klon-Schutzmaßnahmen
- 304: Klon- Schutzmaßnahmen- Kategorie
- 305-308: Klon-Schutzmaßnahmen

- 400: Verbrauchseinrichtung
- 401: Empfänger
- 402: Verbrauchskomponente
- 403: Authentifizierungsinformation
- 404: Authentifizierungsschaltung
- 405: Ausgabevorrichtung

- 500: Ablaufdiagramm
- 501-504: Ablaufschritte

## Patentansprüche

1. Verbrauchseinrichtung (400) aufweisend:
Einen Empfänger (401), der eingerichtet ist, von einer Verbrauchskomponente (402) eine Authentifizierungsinformation (403) zu empfangen;
Eine Authentifizierungsschaltung (404), die eingerichtet ist, zu überprüfen, ob die empfangene Authentifizierungsinformation (403) eine vorgegebene Marke spezifiziert und die Verbrauchskomponente (402) für die Verwendung mit der Verbrauchseinrichtung (400) zu authentifizieren, wenn die empfangene Authentifizierungsinformation (403) die vorgegebene Marke spezifiziert; und
Eine Ausgabevorrichtung (405), die eingerichtet ist, die Authentifizierungsinformation (403) zumindest teilweise auszugeben.

2. Verbrauchseinrichtung (400) gemäß Anspruch 1, wobei die Ausgabevorrichtung (405) eine Anzeige aufweist, die eingerichtet ist, die Authentifizierungsinformation (403) anzuzeigen.

3. Verbrauchseinrichtung (400) gemäß Anspruch 1 oder 2, wobei die Authentifizierungsinformation (403) eine Zeichenkette aufweist und die Authentifizierungsschaltung (404), eingerichtet ist, zu überprüfen, ob die Zeichenkette einen vorgegebenen Markennamen spezifiziert, und die Verbrauchskomponente (402) für die Verwendung mit der Verbrauchseinrichtung (400) zu authentifizieren, wenn die Zeichenkette den vorgegebenen Markennamen spezifiziert.

4. Verbrauchseinrichtung (400) gemäß Anspruch 1 oder 2, wobei die Authentifizierungsinformation (403) ein Logo aufweist und die Authentifizierungsschaltung (404), eingerichtet ist, zu überprüfen, ob das Logo ein vorgegebenes Markenlogo spezifiziert, und die Verbrauchskomponente (402) für die Verwendung mit der Verbrauchseinrichtung (400) zu authentifizieren, wenn das Logo das vorgegebene Markenlogo spezifiziert.

5. Verbrauchseinrichtung (400) gemäß einem der Ansprüche 1 bis 4, wobei die Verbrauchseinrichtung (400) ein Drucker und die Verbrauchskomponente (402) eine Druckerpatrone ist oder die Verbrauchseinrichtung (400) ein Inhaliergerät und die Verbrauchskomponente (402) eine Nachfüllpatrone ist.

6. Verbrauchseinrichtung (400) gemäß einem der Ansprüche 1 bis 5, wobei die Marke einen Hersteller der Verbrauchseinrichtung (400) identifiziert.

7. Verbrauchseinrichtung (400) gemäß einem der Ansprüche 1 bis 6, wobei die Marke einen Hersteller von für die Verbrauchseinrichtung (400) originalen Verbrauchskomponenten spezifiziert.

8. Verbrauchseinrichtung (400) gemäß einem der Ansprüche 1 bis 7, wobei der Empfänger (401) eingerichtet ist, eine weitere Authentifizierungsinformation (403) zu empfangen und die Authentifizierungsschaltung (404) eingerichtet ist, zu überprüfen, ob die empfangene weitere Authentifizierungsinformation (403) einer vorgegebenen weiteren Authentifizierungsinformation (403) entspricht, und die Verbrauchseinrichtung (400) nur dann zu authentifizieren, wenn die empfangene Authentifizierungsinformation (403) die vorgegebene Marke spezifiziert und wenn die empfangene weitere Authentifizierungsinformation (403) der vorgegebenen weiteren Authentifizierungsinformation (403) entspricht.

9. Verbrauchseinrichtung (400) gemäß einem der Ansprüche 1 bis 8, wobei die Ausgabevorrichtung (405) eingerichtet ist, zumindest einen solchen Teil der Authentifizierungsinformation (403) auszugeben, der die vorgegebene Marke spezifiziert.

10. Verbrauchseinrichtung (400) gemäß einem der Ansprüche 1 bis 9, wobei die Ausgabevorrichtung (405) eingerichtet ist, zumindest einen solchen Teil der Authentifizierungsinformation (403) auszugeben, der die vorgegebene Marke für einen Benutzer erkenntlich macht.

11. Verbrauchskomponente (402), aufweisend einen Sender, der eingerichtet ist, eine Authentifizierungsinformation (403) an eine Verbrauchseinrichtung (400) zu senden, wobei die Authentifizierungsinformation (403) eine vorgegebene Marke spezifiziert.

12. Verfahren zum Authentifizieren einer Verbrauchskomponente (402) bei einer Verbrauchseinrichtung (400) aufweisend:
Empfangen einer Authentifizierungsinformation (403) von der Verbrauchskomponente (402) durch die Verbrauchseinrichtung (400);
Überprüfen, ob die empfangene Authentifizierungsinformation (403) eine vorgegebene Marke spezifiziert
Authentifizieren der Verbrauchskomponente (402) für die Verwendung mit der Verbrauchseinrichtung (400), wenn die empfangene Authentifizierungsinformation (403) die vorgegebene Marke spezifiziert; und
Zumindest teilweises Ausgeben der Authentifizierungsinformation (403).
